# EUROPEAN PATENT APPLICATION

(11) **EP 4 786 103 A1**
(43) Date of publication of application: **05.08.2026**
(21) Application number: 26154052.0
(22) Date of filing: 26.01.2026
(51) Int. Cl.: B25B 25/00, B21D 39/04, B23D 29/00, B25B 27/10, B25B 27/14

(54) **ELECTROMECHANICAL ASSEMBLY TOOL WITH TORQUE MOTOR**

(30) Priority: 30.01.2025 DE 102025103525
(71) Applicant: Oetiker Schweiz AG, 8810 Horgen (CH)
(72) Inventor: HOFMANN, Willy, 8810 Horgen (CH); STEINER, Peter, 8810 Horgen (CH)
(74) Representative: Strehl & Partner mbB

(57) **Abstract**

The invention relates to an electromechanical assembly tool (10) including a housing (12), a torque motor (16), a planetary roller screw (18) and a linearly movable pincer head wedge (30), wherein the torque motor (16) includes a stator (38) and a rotor (40), wherein the stator (38) is mounted in the housing (12) and the rotor (40) is clamped and fixed on the rotatable but axially fixed spindle (32) of the planetary roller screw (18). The planetary roller screw (18) includes a spindle (32), a nut (34) and plural planetary rollers (36), wherein the nut (34) held in the housing (12) in an axially moveable but non-rotatable manner and axially connected to the pincer head wedge (30) such that the rotary movement of the motor rotor (40) is converted into a linear movement of the nut (34) and of the pincer head wedge (30).

It is proposed that the rotor (40) of the torque motor (16) is directly mounted on the rotatable spindle (32) of the planetary roller screw (18).

## Description

The invention relates to an electromechanical assembly tool with a torque motor.

In order to realize the high pressing forces required for the crimping of steel pipes, for example, commercially available deformation machines have a pressing head which is driven by a pressing cylinder. Here, the pressing cylinder is commonly hydraulically driven for the purposes of moving the pressing head. An electric motor drives, in turn, a hydraulic pump, which outputs the linear movement of the pressing cylinder.

The power tools known from the prior art typically have a hydraulically driven linear actuator. However hydraulically driven linear actuators tend to be complex to develop, to be too large or too long with regard to handling, to be inefficient, and to be too heavy. Furthermore, the power tools known from the prior art which have a hydraulically driven linear actuator require a relatively long time for a single working cycle, wherein one working cycle may for example be one deformation or cutting cycle.

Alternatively, mechanical pressing/cutting and crimping power tools are also known which, instead of the hydraulics, generate the pressing pressure by means of a threaded spindle drive in combination with an electric motor. Here, the rotational movement of the electric motor is transformed by means of a threaded spindle into a linear movement. These power tools commonly comprise a transmission which is connected between spindle and electric motor and which serves for reducing the required motor torque, in order to thus be able to dimension the motor to be smaller.

The document WO2022111875A1 discloses a tube extrusion press, comprising a drive, an output shaft, a screw gear and a linear actuator, wherein a torque generated by the drive can be transmitted to the linear actuator via the output shaft and the screw gear connected to the output shaft. It is proposed that the screw gear includes an inner screw part having an external screw thread, and an outer screw part having an internal screw thread, the internal screw thread interacting with the external screw thread via at least one bearing roller which has at least one circumferential groove by means of which the bearing roller engages into the external screw thread and the internal screw thread.

The power tool disclosed in WO2022111875A1 employs an eccentric transmission device between the drive, which is embodied as a brushless electric motor, and an output shaft adjoined to the threaded spindle drive. The provision of the eccentric transmission device results in a high weight and large size of the tube extrusion press.

The document US 9,808,851 B2 discloses a power tool with a ball screw mechanism and a drive unit, wherein the drive unit is connected to the ball screw mechanism via a transmission.

The invention is based on the problem of reducing the size and weight of the assembly tool and potentially the drive train's friction.

The problem is solved by a device having the features of claim 1. Advantageous embodiments of the invention are defined in the dependent claims.

The invention relates to an electromechanical assembly tool including a housing, a torque motor, a planetary roller screw and a linearly movable pincer head wedge. The torque motor includes a stator and a rotor. The stator is mounted in the housing and the rotor is clamped and fixed on a rotatable but axially fixed spindle of the planetary roller screw. The planetary roller screw includes the spindle, a nut and plural planetary rollers, wherein the nut is held in the housing in an axially moveable but non-rotatable manner and is axially connected to the pincer head wedge such that the rotary movement of the motor rotor is converted into a linear movement of the nut and of the pincer head wedge.

It is proposed that the rotor of the torque motor is directly mounted on the rotatable spindle of the planetary roller screw.

A torque motor in the sense of the present invention is a type of direct drive motor specifically designed to produce high torque at low rotational speeds, without the need for additional gearing. It is typically constructed with a large diameter and a short axial length. This design allows it to deliver precise and efficient torque, making it suitable for applications requiring high accuracy and dynamic performance.

By directly attaching the torque motor to the spindle and avoiding a gear transmission between these elements, which is generally used to amplify the torque of an electrical motor, a remarkable reduction of the weight and size of the tool can be achieved. The usage of a torque motor combined with a planetary roller screw with a small pitch of the thread will allow for a more compact and lightweight assembly tool.

Preferably, the electromechanical assembly tool includes a user interface having a display and control elements such as switches or any kind of human-machine-interface. Further, the control unit preferably includes a wireless communication interface for communication with external systems, e.g. for logging operations, strokes and forces and receiving target values for the operation.

In a preferred embodiment of the invention, the rotor is fixed on the rotatable spindle of the planetary roller screw with an axial pretension clamping nut. This ensures a robust connection free from play.

It is further proposed that the tool includes an encoder mounted next to the stator of the torque motor and a magnet mounted on the spindle. This enables a precise control of the linear movement of the nut and therefore of the stroke of the pincer.

In a preferred embodiment of the invention, the stator is clamped and fixed in the housing by an axial clamping lid.

In a preferred embodiment of the invention, spindle is axially held in place by an angular ball bearing which allows the spindle to rotate, in particular a two-row ball bearing in X-configuration. This ensures a precise positioning of the spindle with low.

The inventors further propose that the thread of the spindle is fine, wherein the thread of spindle preferably has a pitch between 0.5 mm and 3.0 mm.

In a preferred embodiment, the housing includes an elongate, preferably cylindrical portion accommodating the torque motor and a planetary roller screw and handle portion attached to the elongate portion, wherein a battery pack is accommodated in or attached to the handle portion.

In an alternative embodiment of the invention, the planetary roller screw includes an axially fixed nut and a movable spindle. In such an embodiment, the spindle is held in the housing in an axially moveable but non-rotatable manner and is axially connected to the pincer head wedge such that the rotary movement of the motor rotor is converted into a linear movement of the spindle and of the pincer head wedge. stator is mounted in the housing and the rotor is mechanically connected to the rotatable but axially fixed nut of the planetary roller screw. In this case, the rotor of the torque motor is directly mounted on the rotatable nut of the planetary roller screw.

Further features and advantages will be apparent from the following description of the embodiments and figures. The entire description, claims and figures disclose features of the invention in specific embodiments and combinations. The person skilled in the art will also consider the features individually and combine them into further combinations or sub-combinations to adapt the invention, as defined in the claims, to his needs or to specific fields of application.

The figures illustrate the following:
Fig. 1 illustrates an electromechanical assembly tool according to a first embodiment of the invention;
Fig. 2 is a sectional view of the electromechanical assembly tool according to the invention; and
Fig. 3 illustrates an electromechanical assembly tool according to a second embodiment of the invention.

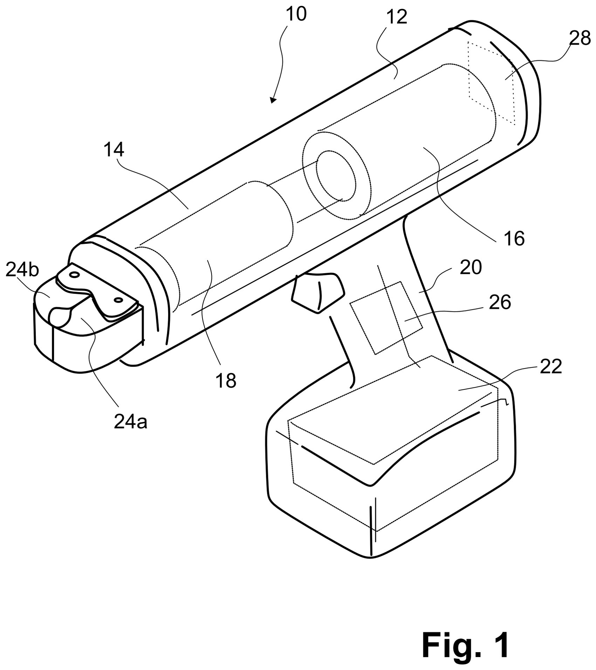

Fig. 1 shows an electromechanical assembly tool 10 according to a first embodiment of the invention.

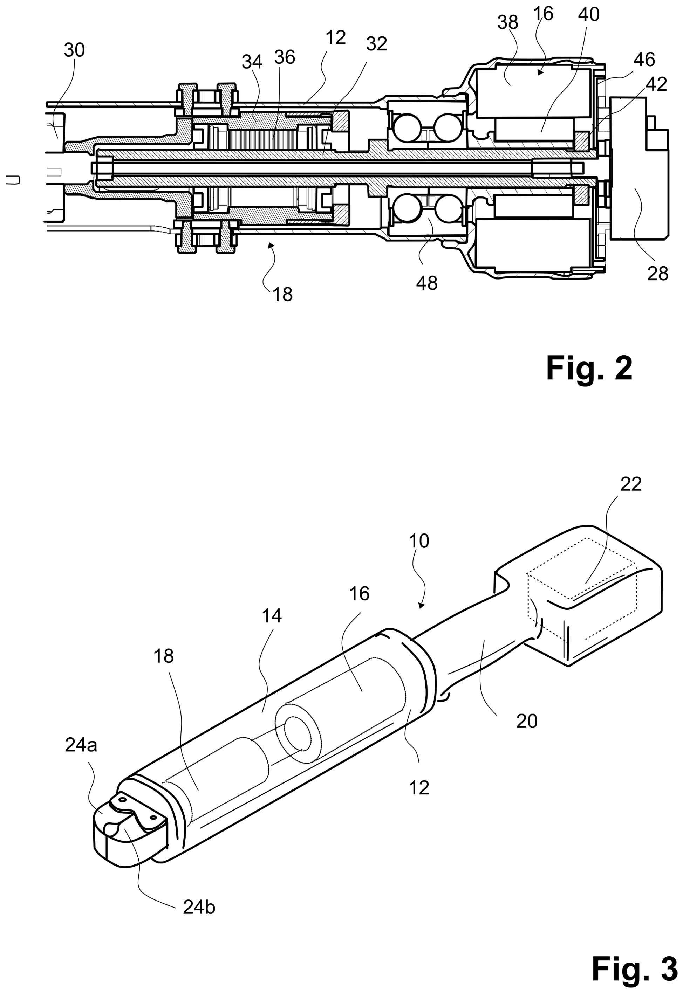

The electromechanical assembly tool 10 includes a housing 12 with an elongate, roughly cylindrical portion 14 accommodating a torque motor 16 (Fig. 2) and a planetary roller screw 18 and a handle portion 20 attached to the elongate portion 14 at an angle such that the entire configuration resembles a pistol. A switch 20 for actuating the tool is provided in an angle between the elongate portion 14 and the handle portion 20. A battery pack 22 is accommodated in or attached to the handle portion 20.

A front end of the assembly tool 10 is provided with a pair of pincer jaws 24a, 24b and is configured to close ear-clamps in the course of a manufacturing process by applying a predetermined force. Both the stroke and the closing force of the tool 10 are controlled by a control unit 26 controlling the torque motor 16 using an encoder 28 as explained in further detail below.

The configuration of the tool 10 as a pincer for closing ear clamps is one of a plurality of possible examples. The linear movement the linear movement produced and controlled by the planetary roller screw can generate forces in both directions, i.e. push and pull. In configurations as pulling tool, the tool could e.g. be configured for tightening cable ties. Moreover, the electromechanical assembly tool could be configured as a crimping tool, e.g. a crimping tool for crimping pipe connections.

Fig. 2 is a sectional view of the electromechanical assembly tool 10 according to the invention. The electromechanical assembly tool 10 includes the housing 12, the torque motor 16, the planetary roller screw 18 and a linearly movable pincer head wedge 30 for actuating the pincer jaws 24a, 24b. The planetary roller screw 18 includes a spindle 32, a nut 34 and plural planetary rollers 36, wherein the nut 34 is held in the housing 12 in an axially moveable but non-rotatable manner. The torque motor 16 includes a stator 38 and a rotor 40. The stator 38 is mounted in the housing 12 and the rotor 40 is clamped and fixed on the rotatable but axially fixed spindle 32 of the planetary roller screw 18. The nut 34 of the planetary roller screw 18 is axially connected to the pincer head wedge 30 such that the rotary movement of the motor rotor 40 is converted into a linear movement of the nut 34 and of the pincer head wedge 30.

It is noted that the invention is not limited to configurations with an axially fixed spindle 32 and a movable nut 34. Alternative embodiments include a planetary roller screw with an axially fixed nut and movable spindle. In such an embodiment, the spindle is held in the housing in an axially moveable but non-rotatable manner and is axially connected to the pincer head wedge such that the rotary movement of the motor rotor is converted into a linear movement of the spindle and of the pincer head wedge. stator is mounted in the housing and the rotor is mechanically connected to the rotatable but axially fixed nut of the planetary roller screw. In this case, the rotor of the torque motor is directly mounted on the rotatable nut of the planetary roller screw.

According to the invention, the rotor 40 of the torque motor 16 is directly mounted on the rotatable spindle 32 of the planetary roller screw 18. Specifically, the rotor 40 fixed on the rotatable spindle 32 of the planetary roller screw 18 with an axial pretension clamping nut 42.

As already indicated above, the electromechanical assembly tool 10 further includes an encoder 28 mounted next to the stator 38 of the torque motor 16 and a magnet 44 mounted on the spindle 32. This enables a precise and reliable control of the rotation of the torque motor 16 and, as a consequence, of the linear position of the nut 34 and the stroke of the pincer jaws 24a, 24b along with the torque in a precise manner.

The stator 38 is clamped and fixed in the housing 12 by an axial clamping lid 46.

The spindle 32 is axially held in place by an angular two-row ball bearing 48 which allows the spindle 32 to rotate. Preferably, spindle 32 has a very fine thread to have a achieve a highspeed reduction ratio and extremely high pressing forces. Preferably, the thread of spindle 32 has a pitch between 0.5 mm and 3.0 mm.

Fig. 3 illustrates a further embodiment of the invention. In order to avoid repetition, the following description of these further embodiments is essentially limited to differences from the first embodiment of the invention. Because of the unchanged features, the skilled person is referred to the description of the first embodiment. The same reference signs are used for features of the further embodiments that have the same or similar effect in order to emphasize the similarities.

The electromechanical assembly tool 10 has an overall elongate shape wherein the longitudinal direction of the handle portion 20 is aligned with the longitudinal direction of the elongate portion 14 of the housing 12.

### List of reference numbers

10 electromechanical assembly tool
12 housing
14 elongate portion
16 torque motor
18 planetary roller screw
20 switch
22 battery pack
24a, 24b jaws
26 control unit
28 encoder
30 pincer head wedge
32 spindle
34 nut
36 rollers
38 stator
40 rotor
42 clamping nut
44 magnet
46 clamping lid
48 bearing

## Claims

1. Electromechanical assembly tool (10) including a housing (12), a torque motor (16), a planetary roller screw (18) and a linearly movable pincer head wedge (30),
wherein the torque motor (16) includes a stator (38) and a rotor (40),
wherein the planetary roller screw (18) includes a spindle (32), a nut (34) and plural planetary rollers (36), wherein the nut (34) is held in the housing (12) in an axially moveable but non-rotatable manner and is axially connected to the pincer head wedge (30) such that the rotary movement of the motor rotor (40) is converted into a linear movement of the nut (34) and of the pincer head wedge (30), and
wherein the stator (38) is mounted in the housing (12) and the rotor (40) is mechanically connected to the rotatable but axially fixed spindle (32) of the planetary roller screw (18),
**characterized in that** the rotor (40) of the torque motor (16) is directly mounted on the rotatable spindle (32) of the planetary roller screw (18).

2. Electromechanical assembly tool (10) according to claim 1, **characterized in that** the rotor (40) is fixed on the rotatable spindle (32) of the planetary roller screw (18) with an axial pretension clamping nut (42).

3. Electromechanical assembly tool (10) according one of the preceding claims,
**characterized by** further including an encoder (28) mounted next to the stator (38) of the torque motor (16) and a magnet (44) mounted on the spindle (32).

4. Electromechanical assembly tool (10) according one of the preceding claims,
**characterized in that** the stator (38) is clamped and fixed in the housing (12) by an axial clamping lid (46).

5. Electromechanical assembly tool (10) according one of the preceding claims,
**characterized in that** spindle (32) is axially held in place by an angular ball bearing (48) which allows the spindle (32) to rotate.

6. Electromechanical assembly tool (10) according one of the preceding claims,
**characterized in that** the thread of spindle (32) has a pitch between 0.5 mm and 3.0 mm.

7. Electromechanical assembly tool (10) according to one of the preceding claims,
**characterized in that**
the housing (12) includes an elongate, preferably cylindrical portion (14) accommodating the torque motor (16) and a planetary roller screw (18) and handle portion (20) attached to the elongate portion (14), wherein a battery pack (22) is accommodated in or attached to the handle portion (20).

8. Electromechanical assembly tool (10) including a housing (12), a torque motor (16), a planetary roller screw (18) and a linearly movable pincer head wedge (30),
wherein the torque motor (16) includes a stator (38) and a rotor (40),
wherein the planetary roller screw (18) includes a spindle (32), a nut (34) and plural planetary rollers (36), wherein the spindle (32) is held in the housing (12) in an axially moveable but non-rotatable manner and is axially connected to the pincer head wedge (30) such that the rotary movement of the motor rotor (40) is converted into a linear movement of the spindle (32) and of the pincer head wedge (30), and
wherein the stator (38) is mounted in the housing (12) and the rotor (40) is mechanically connected to the rotatable but axially fixed nut (34) of the planetary roller screw (18),
**characterized in that** the rotor (40) of the torque motor (16) is directly mounted on the rotatable nut (34) of the planetary roller screw (18).
